# EUROPEAN PATENT APPLICATION

(11) **EP 1 292 042 A2**
(43) Date of publication of application: **12.03.2003**
(21) Application number: 02019823.0
(22) Date of filing: 05.09.2002
(51) Int. Cl.: H04B 1/38, H01Q 1/24

(54) **Foldable portable phone with metal casing, shieldings and second antenna to control radiation**

(30) Priority: 05.09.2001 KR 2001054384
(71) Applicant: SAMSUNG ELECTRONICS CO., LTD., Suwon-City, Kyungki-do (KR)
(72) Inventor: Lee, Juh-Hyung, Suwon-city, Kyunkgi-do (KR); Byun, Joon-Ho, Suwon-city, Kyunkgi-do (KR)
(74) Representative: Grünecker, Kinkeldey, Stockmair & Schwanhäusser Anwaltssozietät

(57) **Abstract**

A foldable telephone comprising means to minimize the SAR level when the telephone is unfolded. Both the main housing and the folding housing can be made of metal, shields can be included in both casings or a second antenna can be included to minimize the RF radiation emitted towards users head.

## Description

The present invention relates generally to a portable phone, and in particular, to a folder-type portable phone of which the radiation is controlled to thereby minimize its SAR (Specific Absorption Rate) level.

In general, portable phones are categorized into a bar type, a folder type, and a flip type according to their appearances, or into a necklace type and a wrist type according to where they are carried or worn. To adapt to a multimedia environment, Internet access, moving picture transmission, e-mail, chatting, and text transmission are offered through portable phones. A typical folder-type portable phone among them is comprised of a body, a folder, and a hinge means connecting the body to the folder.

Folder-type portable phones are equipped with directional or omni-directional antennas. The omni-directional antennas offer the benefit of good performance only if they are not near the head of a user. When they operate near the head, the human body is exposed to more intensity of electromagnetic waves emitted from the portable phones. Therefore, antenna performance is deteriorated and a standard of biological effects of the electromagnetic waves, an SAR is increased.

Directional antennas, on the other hand, are directed in a specific direction, especially in a direction where electromagnetic waves do not affect the human body. Therefore, when the directional antennas are near the human body, they exhibit good call performance and decreased SAR levels, as compared to omni-directional antennas.

Yet, the directional antennas have limitations in receiving waves from a particular direction, thereby deteriorating performance. In this context, there is a need for an antenna device supporting both directional and omni-directional characteristics for a folder-type portable phone.

It is, therefore, an object of the present invention to provide a folder-type portable phone having different radiation characteristics when a folder is completely closed, the folder is opened, and the folder is near the human body in an open state.

It is another object of the present invention to provide a folder-type portable phone having omni-directional radiation when it is not near a human head, and directional radiation when it is near the human head.

It is a further object of the present invention to provide a folder-type portable phone with a minimum SAR level.

To achieve the above and other objects, there is provided a folder-type portable phone with controllable radiation. In the folder-type portable phone, a body housing is a metal case, a folder housing is a metal case, a hinge device rotatably connects the folder housing to the body housing, and a contact portion makes contact between the body housing and the folder housing when the folder housing is completely opened from the body housing, so that the SAR (Specific Absorption Rate) level of the folder-type portable phone is minimized.

The above and other objects, features and advantages of the present invention will become more apparent from the following detailed description when taken in conjunction with the accompanying drawings in which:
FIGs. 1A, 1B, and 1C are side views of a folder-type portable phone with a minimum SAR level when it is closed and opened according to a preferred embodiment of the present invention;
FIGs. 2A, 2B, and 2C are side views of a folder-type portable phone with a minimum SAR level when it is closed and opened according to another preferred embodiment of the present invention;
FIG. 3 is a perspective view of a folder-type portable phone with a minimum SAR level at a closed state according to a third preferred embodiment of the present invention;
FIG. 4 is a partial frontal sectional view of the folder-type portable phone illustrated in FIG. 3 with a folder housing opened, viewed from the rear of the folder-type portable phone;
FIG. 5A is a sectional view of a first copper plate and a second copper plate in the folder-type portable phone illustrated in FIG. 3;
FIG. 5 B is a sectional view of another embodiment of the first copper plate illustrated in FIG. 5A;
FIG. 6 is a graph showing a comparison between radiation patterns of the folder-type portable phone according to the first preferred embodiment of the present invention when a body housing contacts a folder housing in a fully open state and when they do not contact in a closed state;
FIG. 7 is a graph showing a comparison between SAR levels of the folder-type portable phone according to the first preferred embodiment of the present invention when the body housing contacts the folder housing in a fully open state and when they do not contact in a closed state;
FIGs. 8A, 8B, and 8C are side views of a folder-type portable phone with a minimum SAR level when it is closed and opened according to a fourth preferred embodiment of the present invention;
FIGs. 9A and 9B are side views of a folder-type portable phone with a minimum SAR level when it is closed and opened according to a fifth preferred embodiment of the present invention; and
FIGs. 10A and 10B are side views of a folder-type portable phone with a minimum SAR level when it is closed and opened according to a sixth preferred embodiment of the present invention.

Preferred embodiments of the present invention will be described herein below with reference to the accompanying drawings. In the following description, well-known functions or constructions are not described in detail since they would obscure the invention in unnecessary detail.

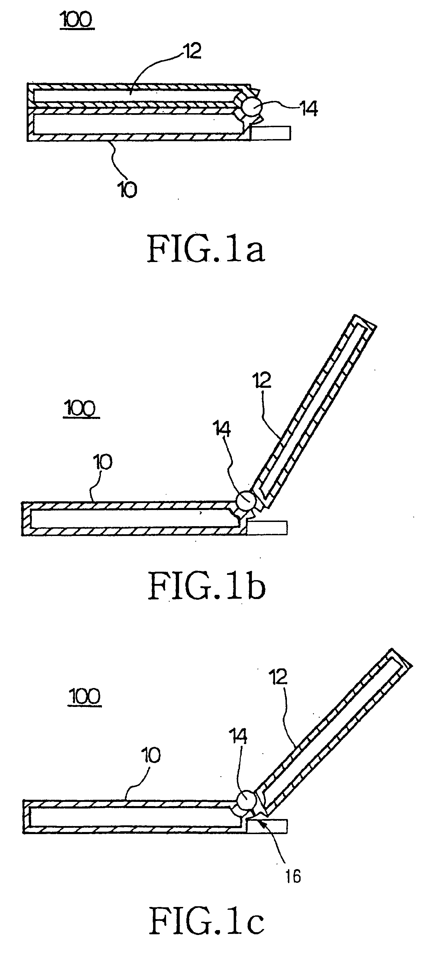

FIG. 1A is a side view of a folder-type portable phone 100 with a minimum SAR level when a folder housing 12 is completely closed against a body housing 10. FIG. 1B is a side view of the folder-type portable phone 100 when the folder housing 12 is opened away from the body housing 10. FIG. 1C is a side view of the folder-type portable phone 100 when the folder housing 12 is fully opened away from the body housing 10 according to a preferred embodiment of the present invention.

Referring to FIGs. 1A, 1B, and 1C, the folder-type portable phone 100 includes the body housing 10, the folder housing 12, and a hinge device 14 that rotatably connects the body housing 10 to the folder housing 12. Though not shown, a keypad having a plurality of keys, for inputting data and a microphone are provided in the body housing 10, and an LCD (Liquid Crystal Display) for displaying data and a speaker are disposed in the folder housing 12. The hinge device 14 enables the folder housing 12 to be opened at an angle ranging from about 135° to 150° with respect to the body housing 10. The folder housing 12 can be unfolded at a greater angle when the speaker and the microphone are close to a user's ear and mouth.

According to the preferred embodiment of the present invention, the body housing 10 and the folder housing 12 are conductive metal cases. A hinge housing for the hinge device 14 is also metal.

As illustrated in FIG. 1C, when the folder housing 12 is completely opened from the body housing 10, they are brought into contact at predetermined contact portions 16. The body housing 10 and the folder housing 12 approach each other or are apart from each other with respect to the contact portions 16. When the user completely opens the folder housing 12 from the body housing 10, i.e., places the phone in a position to use the phone close to the body of the user (at the ear and mouth of the user), they contact each other.

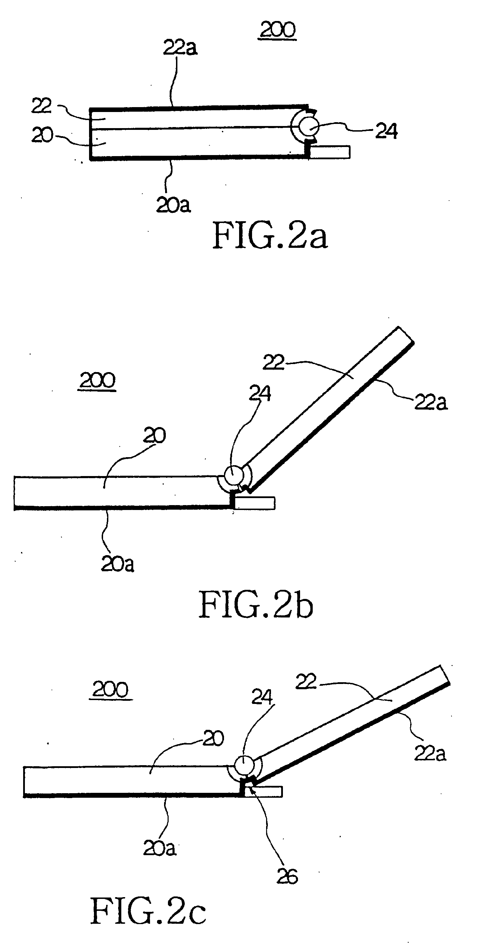

FIG. 2A is a side view of a folder-type portable phone 200 with a minimum SAR level when a folder housing 22 is completely closed against a body housing 20. FIG. 2B is a side view of the folder-type portable phone 200 when the folder housing 22 is opened away from the body housing 20. FIG. 2C is a side view of the folder-type portable phone 200 when the folder housing 22 is fully opened away from the body housing 20 according to another preferred embodiment of the present invention.

Referring to FIGs. 2A, 2B and 2C, the folder-type portable phone 200 includes the body housing 20 with a first ground portion 20a, the folder housing 22 with a second ground portion 22a, a hinge device 24 that rotatably connects the body housing 20 to the folder housing 22, and contact portions 26 which contact each other at the first and second ground portions 20a and 22a when the folder housing 22 is completely opened from the body housing 20 (FIG. 2C). The contact portions 26 are provided when the first and second ground portions 20a and 22a are brought into contact. The contact portions 26 are specifically disposed at ends of the first and second ground portions 20a and 22a. If the user completely opens the folder housing 22 from the body housing 20 for a call, the first and second ground portions 20a and 22a contact each other, offering the contact portions 26. The contact portions 26 minimize the SAR level of the folder-type portable phone 200 even though it is close to the human body.

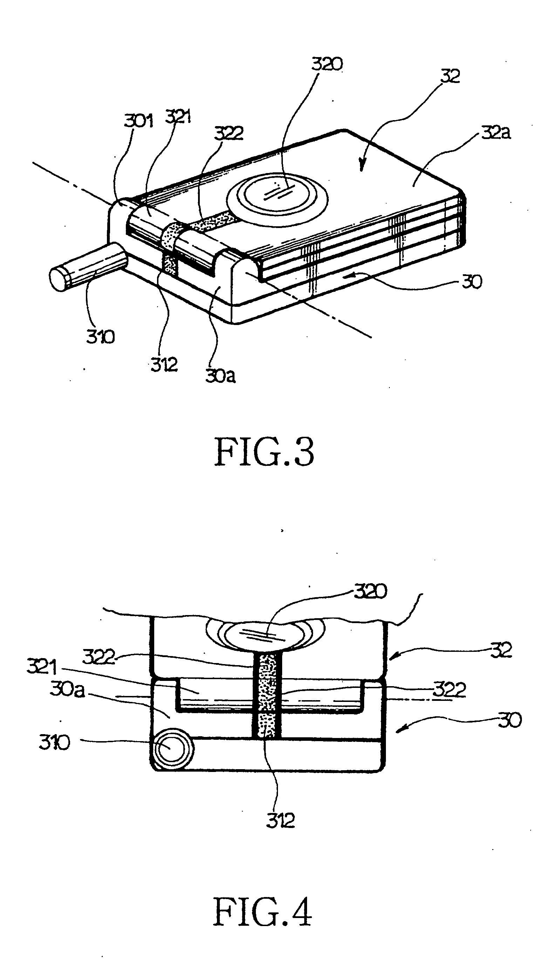

FIGs. 3 and 4 illustrate a folder-type portable phone according to a third preferred embodiment of the present invention. Referring to FIGs. 3 and 4, the folder type portable phone includes a body housing 30, a folder housing 32, and a hinge module (not shown) for rotatably connecting the body housing 30 to the folder housing 32. The folder-type portable phone is at a closed state in FIGs. 3 and 4. The folder housing 32 having a sub-LCD 320 on its upper surface 32a is opened or closed upon a hinge axis with respect to the body housing 30. The body housing 30 has side hinge arms 301 symmetrically facing each other, and the folder housing 32 has a center hinge arm 321 engaged between the side hinge arms 301. The folder-type portable phone is provided with a first copper plate 312 and a second copper plate 322 on the rear end 30a and top end 32a of the body housing 30, respectively. When the folder housing 32 is completely opened from the body housing 30, the first and second copper plates 312 and 322 are brought into contact, thereby minimizing the SAR level of the folder-type portable phone. The first copper plate 312 is provided upright to the rear end 30a and the second copper plate 322 is provided lengthwise on the top end 32a across the center hinge arm 321. When the folder housing 32 is completely closed to the body housing 30, the first copper plate 312 comes to a position slightly spaced from the second copper plate 322, facing each other. When the folder housing 32 is opened from the body housing 30, the first and second copper plates 312 and 322 contact.

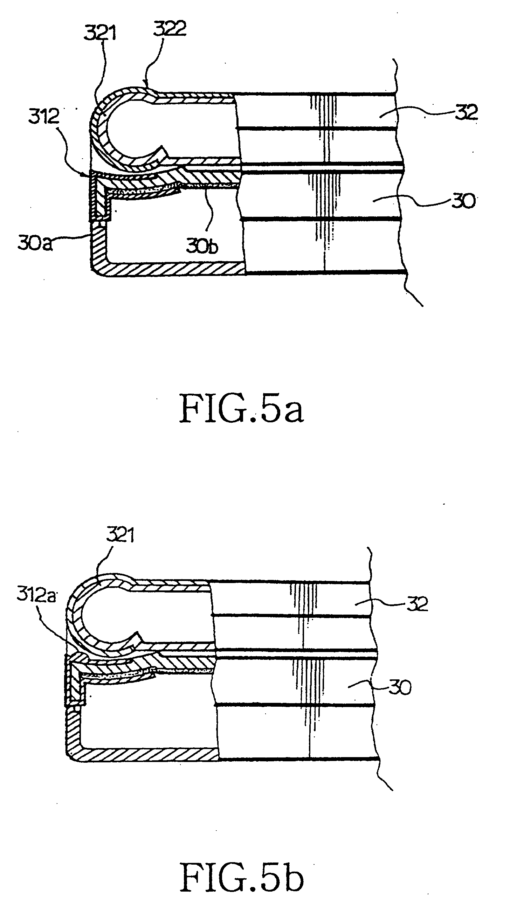

In accordance with the third embodiment of the present invention, the first copper plate 312 contacts the second copper plate 322 during a call, thereby controlling the SAR level. The first copper plate 312 is connected to a shield sash or conductive pigment 30 b in the body housing 30, as illustrated in FIG. 5A.

FIG. 5B illustrates another embodiment of the first copper plate 312 illustrated in FIG. 3. Referring to FIG. 5B, when the folder housing 32 is completely opened from the body housing 30, the first copper plate 312 has a protrusion 312a protruding toward the center hinge arm 321 to increase contact between the first and second copper plates 312 and 322.

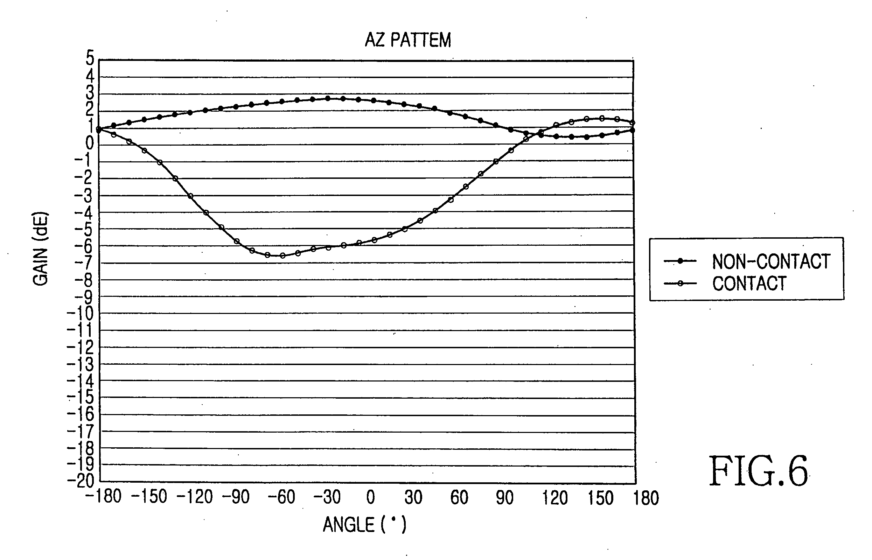

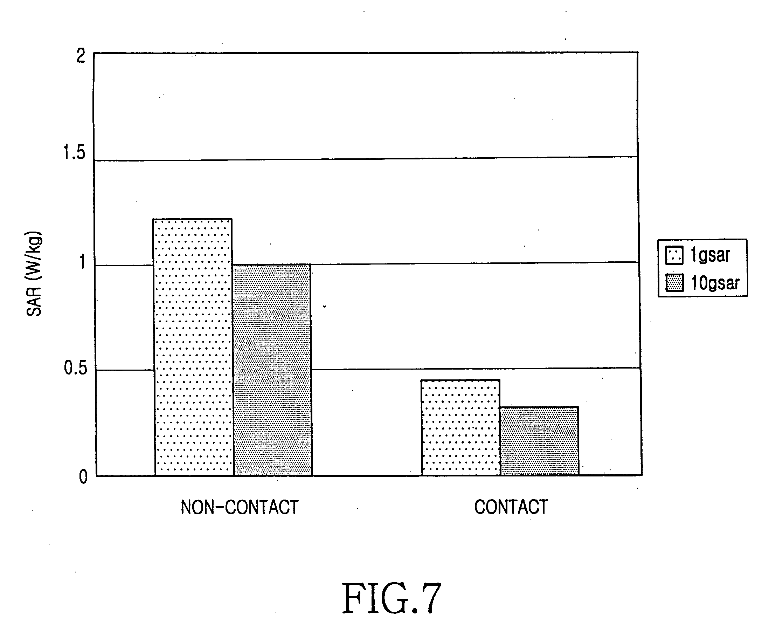

FIGs. 6 and 7 are graphs showing SAR levels that are minimized when the body housing 10 contacts the folder housing 12 when the folder-type portable phone 100 is at a call mode. As noted from FIGs. 6 and 7, an excellent radiation pattern is achieved when the body housing 10 does not contact the folder housing 12, that is, the folder-type portable phone 100 is not near to the human body.

When the body housing 10 contacts the folder housing 12, that is, the folder-type portable phone 100 is near the human body, as illustrated in FIG. 1C, a bad radiation pattern in a free space is obtained and the radiation pattern deterioration usually occurs in the direction of the human body between -90° and +90°. Therefore, the folder-type portable phone 100 is less influenced by the human body as it is closer to the human body. As a result, different radiation patterns and different call performances are exhibited according to whether the body housing 10 and the folder housing 12 contact or not. In the case of a portable phone having typical directional characteristics, when the human head is positioned toward low radiation power, its SAR is decreased. In FIG. 6, the human head is positioned at around 0°. Since the radiation intensity is low in that direction, the SAR is decreased.

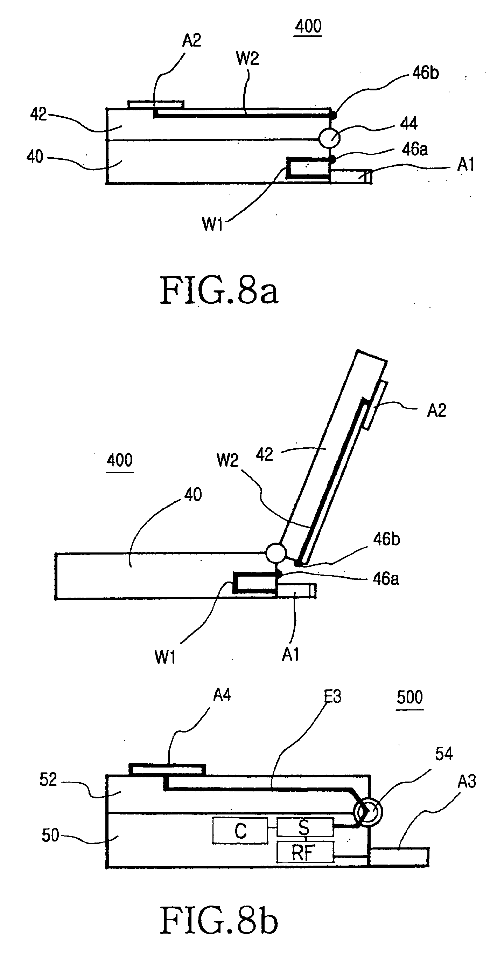

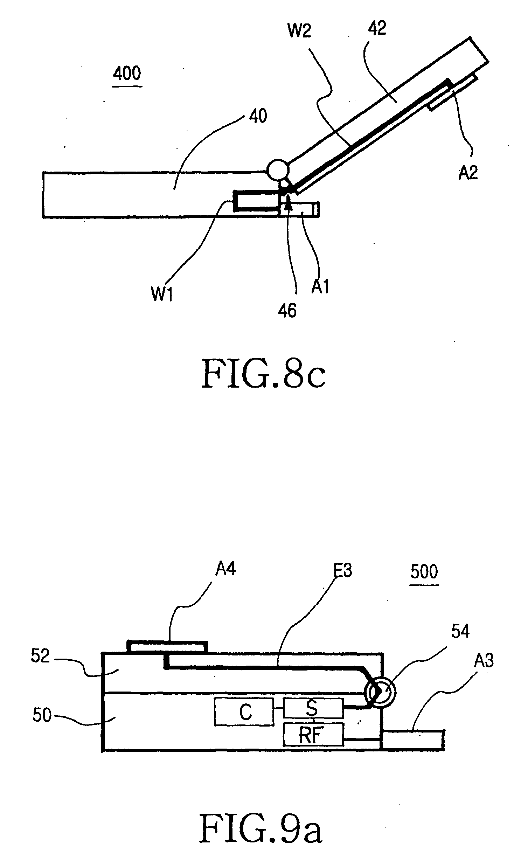

FIGs. 8A, 8B, and 8C are side views of a folder-type portable phone in a closed state, in an open state, and during a call in the open state, respectively, according to a fourth preferred embodiment of the present invention. Referring to FIGs. 8A, 8B, and 8C, a folder-type portable phone 400 is comprised of a body housing 40 with a first antenna portion A1, a folder housing 42 with a second antenna portion A2, a hinge device 44 for rotatably connecting the folder housing 42 to the body housing 40, and a contact portion 46 at which the first and second antenna portions A1 and A2 contact when the folder housing 42 is completely opened from the body housing 40.

The contact portion 46 includes a first ground terminal 46a protruding from the body housing 40 and a second ground terminal 46b protruding from the folder housing 42. At a completely open state illustrated in FIG. 8C, the first ground terminal 46a is brought into contact with the second ground terminal 46b. At the same time, the first antenna portion A1 is electrically connected to the first ground terminal 46a by a first electrical connector W1, and the second antenna portion A2, to the second ground terminal 46b by a second electrical connector W2. The first and second electrical connectors W1 and W2 can be wires, or flexible circuits. They can also be formed into conductive patterns. The second electrical connector W2 is a power supply to an RF part of the first antenna portion A1. That is, the second ground terminal 46b is connected to the power supply of the first antenna portion A1.

Consequently, the contact portion 46 is provided by the mechanical operation of opening and closing the folder housing 42. That is, the contact portion 46 functions to mechanically switch depending on contact between the body housing 40 and the folder housing 42.

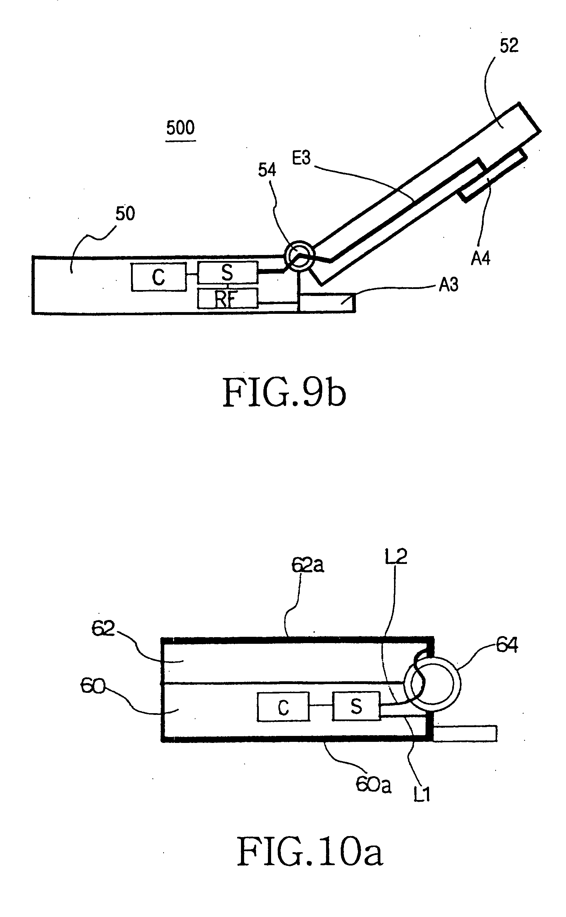

FIGs. 9A and 9B are side views of a folder-type portable phone in a closed state and in an open state, respectively, according to a fifth preferred embodiment of the present invention. Referring to FIGs. 9A and 9B, a folder-type portable phone 500 is comprised of a body housing 50 with a first antenna portion A3, a folder housing 52 with a second antenna portion A4, a hinge device 54 for rotatably connecting the folder housing 52 to the body housing 50, an RF portion RF connected to the first antenna portion A3, and an electrical switch S connected to the second antenna portion A4 and the RF portion RF, for switching on or switching off by sensing the opening and closing of the folder housing 52 or a voice call state. The switching of the electrical switch S is a mode transition between on and off of the second antenna portion A4.

The second antenna portion A4 is connected to the electrical switch S by an electrical connector E3. The electrical connector E3 is extended from the second antenna portion A4 and connected to the electrical switch S of the body housing 50 via the hinge device 54.

When the folder housing 52 is completely closed against the body housing, the electrical switch S turns off the second antenna portion A4, whereas when the folder housing 52 is completely opened away from the body housing 50, the electrical switch S turns on the second antenna portion A4. The electrical switch S operates under the control of a controller C. The switching on and off of the electrical switch S minimizes an SAR level that affects the human body when the folder-type portable phone 500 is close to the human body, or during a voice call.

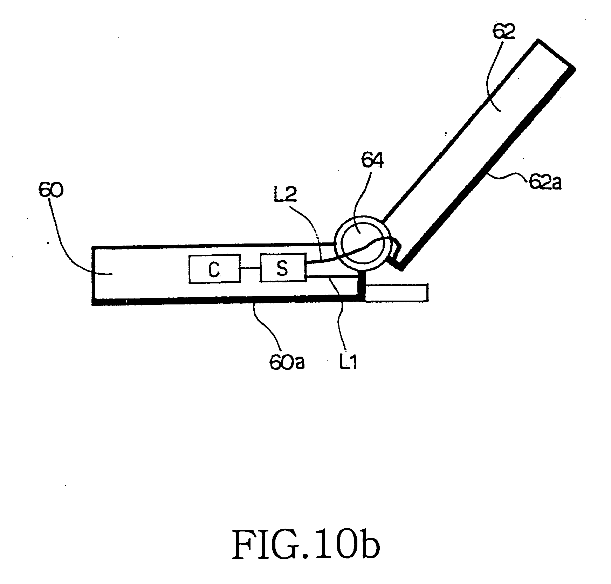

Referring to FIGs. 10A and 10B, a folder-type portable phone according to a sixth preferred embodiment of the present invention includes a body housing 60 with a first ground portion 60a, a folder housing 62 with a second ground portion 62a, an electrical switch S for switching on or off the first and second ground portions 60a and 62a, and a controller C for controlling the electrical switch S by sensing a voice call state. The first ground portion 60a is connected to the electrical switch S by a first conductive line L1, and the second ground portion 62a to the electrical switch S by a second conductive line L2. The controller C controls the electrical switch S to switch on or off in relation to a voice call shortly after the voice call is connected or a predetermined time after the voice call connection.

The conductive line L2 connected to the second ground portion 62a is connected to the electrical switch S via the hinge device 64. While the electrical switch S is provided in the body housing 60, it can be in the folder housing 62. The first and second ground portions 60a and 62a can be the ground portions or copper plates as illustrated in FIGs. 1A to 5. Thus, an SAR level can be minimized during a voice call.

As described above, the folder-type portable phone according to the present invention assumes directional radiation characteristics when it is close to a human body during a call, and omni-directional radiation characteristics at any other operation state. Therefore, the biological effects of electromagnetic waves emitted from the folder-type portable phone are minimized, avoiding deterioration of antenna performance.

## Claims

1. A folder-type portable phone comprising:
a body housing constructed of metal;
a folder housing constructed of metal;
a hinge device for rotatably connecting the folder housing to the body housing; and
a contact portion for making contact between the body housing and the folder housing when the folder housing is completely opened away from the body housing, thereby minimizing an SAR (Specific Absorption Rate) level of the folder-type portable phone.

2. A folder-type portable phone comprising:
a body housing including a first ground portion;
a folder housing including a second ground portion;
a hinge device including a contact portion for making contact between the first ground portion and the second ground portion when the folder housing is completely opened away from the body housing, for rotatably connecting the folder housing to the body housing.

3. A folder-type portable phone comprising:
a body housing including a first antenna;
a folder housing including a second antenna;
a hinge device for rotatably connecting the folder housing to the body housing;
a contact portion for making contact between the first antenna and the second antenna when the folder housing is completely opened away from the body housing; and
a first electrical connector and a second electrical connector for connecting the first antenna and the second antenna to the contact portion, respectively.

4. The folder-type portable phone of claim 3, wherein the contact portion includes protrusions.

5. The folder-type portable phone of claim 3 or 4, wherein the protrusions are a first ground terminal and a second ground terminal protruding from the body housing and the folder housing, respectively.

6. A folder-type portable phone comprising:
a body housing including a first antenna connected to an RF component;
a folder housing including a second antenna;
a hinge device for rotatably connecting the folder housing to the body housing; and
an electrical switch connected to the RF component and the second antenna, for sensing a voice call state according to opening and closing of the folder housing away from and against the body housing and switching on or off the second antenna under control of a controller, thereby minimizing an SAR level of the folder-type portable phone.

7. The folder-type portable phone of claim 6, wherein the second antenna is electrically connected to the electrical switch by an electrical connector via the hinge device.

8. A folder-type portable phone comprising:
a body housing including a first copper plate exposed at a rear end of the body housing;
a folder housing including a second copper plate exposed at a top end of the folder housing;
a hinge device for rotatably connecting the folder housing to the body housing; and
a contact portion for making contact between the first copper plate and the second copper plate when the folder housing is completely opened away from the body housing.

9. The folder-type portable phone of claim 8, wherein the first copper plate is fixed across a center hinge arm of the folder housing.

10. The folder-type portable phone of claim 8 or 9, wherein the first copper plate includes a semi-spherical protrusion.

11. A folder-type portable phone comprising:
a body housing including a first ground portion;
a folder housing including a second ground portion;
a hinge device for rotatably connecting the folder housing to the body housing; and
an electrical switch installed in the body housing, connected to the first ground portion by a first conductive line, and connected to the second ground portion by a second conductive line, for sensing a voice call state and switching on or off the first ground portion and the second ground portion under control of a controller, thereby minimizing an SAR level of the folder-type portable phone.
